# EUROPEAN PATENT APPLICATION

(11) **EP 1 391 489 A1**
(43) Date of publication of application: **25.02.2004**
(21) Application number: 03254522.0
(22) Date of filing: 18.07.2003
(51) Int. Cl.: C09D 11/00

(54) **Inkjet ink**

(30) Priority: 30.07.2002 US 208991
(71) Applicant: Hewlett-Packard Company, Palo Alto, CA 94304 (US)
(72) Inventor: Uhlir-Tsang, Linda C., Corvallis, OR 97330 (US); Moffatt, John R., Corvallis, OR 97330 (US)
(74) Representative: Tollett, Ian

(57) **Abstract**

The inks provide excellent ink-jet prints having excellent colour and performance attributes. The aqueous inks each comprise a colourant (CMYK), a long chain first surfactant and a second short-chain surfactant.

## Description

The present invention generally relates to an ink-jet ink and to a method of printing therewith, and in particular to a specific ink formulation for colour and performance attributes. This ink formulation also provides for improved ink-jet print quality.

Ink-jet printing is a non-impact printing process in which droplets of ink are deposited on a print medium in a particular order to form alphanumeric characters, area-fills, and other patterns thereon. Low cost and high quality of the hardcopy output, combined with relatively noise-free operation, have made ink-jet printers a popular alternative to other types of printers used with computers. Notwithstanding their recent success, intensive research and development efforts continue toward improving ink-jet print quality. A surge in interest in ink-jet printing especially in the area of photographic printing has resulted in the need to produce high quality prints at a reasonable cost. The challenge remains to further improve the print quality of ink-jet prints. The emerging use of ink-jet prints for digital photos, requires high-resolution images that have accurate color, are durable, and do not show banding of colors.

Color ink-jet printers, such as a DesignJet® printer available from Hewlett-Packard Company, typically use three inks of differing hues: magenta, yellow, and cyan, and optionally black. The particular set of colorants, e.g., dyes, used to make the inks is called a "primary dye set." A spectrum of colors, e.g., secondary colors, can be generated using different combinations of the primary dye set.

In general, a successful ink set for color ink-jet printing must be compatible with the ink-jet pen and the printing system. Some of the required properties for the ink-jet ink include color attributes, such as mottle, coalescence, and saturation.

"Mottle" and "coalescence" are defined as inconsistencies (or incongruities) of print density with the same print block due to printing defects and solvent/ink interactions with the media. Good color saturation is attained by maximizing the depth and shade of colors, which is also affected by ink/media interactions.

Inks are known which possess one or more of the foregoing properties. However, few inks are known that possess all the foregoing properties, since an improvement in one property often results in the degradation of another property. Thus, many inks used commercially represent a compromise in an attempt to achieve an ink evidencing at least an adequate response in each of the foregoing considerations. Thus, there remains a need in the art to further improve the color quality of the ink-jet prints without sacrificing pen performance and reliability and wherein the complexity of printer and software design is reduced.

In accordance with the invention, inks suitable for use in ink-jet inks and method for formulating the same are provided. It has been found that a synergy which leads to distinct improvements in coalescence, mottle, color saturation and can be produced by the combination of certain colorants, surfactants, and second or co-surfactants, defined as compounds containing from about 6 to about 10 carbons that is soluble in water by at least 3% by weight. This combination provides a basis for an ink formulation that provides for good color and performance attributes.

Finding a relationship amongst surfactant choices allows a much larger formulation space for future products. Surprisingly, the synergy present amongst the selected surfactants results in a very stable formulation that allows the formulator to significantly increase the choices of suitable surfactants and solvents for use. Moreover, without limitation to theory, it is believed the combination of the surfactants second surfactant increases the solubility of the ink components in the micelles formed by the use of these surfactants. This leads to deeper color saturation and much less mottle and coalescence than with either component alone. This formulation works well on any plain paper media special media.

In the practice of this invention, yellow, cyan, magenta and black aqueous inks each comprise from about 0.1 to about 20 wt % of at least one colorant in the ink formulations; from about 5 to about 15 wt % of at least one linear, branched, or aromatic short chain second or co-surfactant containing from about 6 to about 10 carbons and being soluble in water by at least about 3% by weight, and from about 0.2 to about 6 wt % of at least one linear, branched or unbranched nonionic, anionic, cationic, or zwitterionic first surfactant containing from about 8 to about 18 carbons, preferably from about 11 about 18 carbons. The co-surfactant my be of any charge. Additionally other independently selected ingredients can be added including those from the group consisting of buffers, biocides, and metal chelators; and the balance water. Of course, a person skilled in the art of ink formulation would optimize the ink by coordinating the charges of the various ingredients in the final formula.
While the specification concludes with claims particularly pointing out and distinctly claiming that which is regarded as the present invention, a number of preferred embodiments of this invention can be more readily ascertained from the following description of the invention.

All concentrations herein are in weight percent of total ink composition unless otherwise indicated. The purity of all components is that employed in normal commercial practice for ink-jet inks.

### Colorants

In the practice of this invention, yellow, cyan, magenta, and black aqueous inks each comprise from about 0.1 to about 20 wt % of at least one colorant. If used herein, the preferable amount of cationic dye is from about 0.1 to about 10 wt%; from about 0.1 to about 10 wt% of pigment; and from about 1 to about 20 wt % of at least one black colorant in black ink formulations. The black ink can also be a composite of the three primary colors, yellow, cyan, and magenta.

Dyes - Dyes, whether water-soluble or water-insoluble, may be employed in the practice of the present invention. Examples of water-soluble dyes include the sulfonate and carboxylate dyes, specifically, those that are commonly employed in ink-jet printing. Specific examples include: Sulforhodamine B (sulfonate), Acid Blue 113 (sulfonate), Acid Blue 29 (sulfonate), Acid Red 4 (sulfonate), Rose Bengal (carboxylate), Acid Yellow 17 (sulfonate), Acid Yellow 29 (sulfonate), Acid Yellow 42 (sulfonate), Acridine Yellow G (sulfonate), Nitro Blue Tetrazolium Chloride Monohydrate or Nitro BT, Rhodamine 6G, Rhodamine 123, Rhodamine B, Rhodamine B Isocyanate, Safranine O, Azure B, Azure B Eosinate, Basic Blue 47, Basic Blue 66, Thioflacin T (Basic Yellow 1), and Auramine O (Basic Yellow 2), all available from Aldrich Chemical Company. Examples of water-insoluble dyes include azo, xanthene, methine, polymethine, and anthroquinone dyes. Specific examples of pigmentsinclude Ciba-Geigy Orasol Blue GN, Ciba-Geigy Orasol Pink, and Ciba-Geigy Orasol Yellow. Any dye available and compatible with the other formulated ingredients of this invention may be used as colorants.

### Vehicle

The inks of the present invention comprise an aqueous vehicle comprising the following components (in wt % of total ink composition): from about 5 to about 15, preferably from about 7 to about 11, wt % of at least one second surfactant. The surfactant of the invention is present in an amount of from about 0.2 to about 6, preferably from about 0.5 to about 3 wt % of the ink formula. Because of solubility limitations, the more preferred surfactants have about 8 to 18 carbons. A preferred surfactant is an ethylene oxide surfactant. Additionally other independently selected ingredients can be added, each in an amount ranging of up to 3% (from 0 to about 3%) by wt, including those from the group consisting of buffers, biocides, and metal chelators; and the balance water.

Buffer: The inks of the present invention optionally comprise 0 to about 3 wt % buffer. More preferably, the inks comprise from about 0.1 to about 0.5 wt % buffer, with a concentration from about 0.1 to about 0.3 wt % being the most preferred.

Buffers employed in the practice of the invention to modulate pH can be organic-based biological buffers or inorganic buffers, preferably, organic-based. Further, the buffers employed should maintain a pH ranging from about 3 to about 9 in the practice of the invention, preferably about 6.5 to about 8.5 and most preferably from about 7.2 to 8.5. Examples of preferably-employed buffers include Trizma Base, available from companies such as Aldrich Chemical (Milwaukee, Wis.), 4-morpholineethanesulfonic acid (MES), b-hydroxy-4-morpholinepropanesulfonic acid (MOPSO), and 4-morpholinepropanesulfonic acid (MOPS). Most preferably, TRIZMA is employed in the practice of the invention.

Metal Chelator: The inks of the present invention optionally comprise 0 to about 3 wt % metal chelator. More preferably, the inks comprise from about 0.1 to about 0.5 wt % metal chelator, with a concentration from about 0.1 to about 0.3 wt % being the most preferred.

Metal chelators employed in the practice of the invention are used to bind metal cations that may be present in the ink. Examples of preferably-employed metal chelators include: Ethylenediaminetetraacetic acid (EDTA), Diethylenetriaminepentaacetic acid (DTPA), trans-1,2-diaminocyclohexanetetraacetic acid (CDTA), (ethylenedioxy) diethylenedinitrilotetraacetic acid (EGTA), or other chelators that can bind metal cations. More preferably, EDTA, and DTPA; and most preferably EDTA in its disodium salt form is employed in the practice of the invention.

Biocide: The inks of the present invention optionally comprise 0 to about 3 wt % biocide. More preferably, the inks comprise from about 0.1 to about 0.5 wt % biocide, with a concentration from about 0.1 to about 0.3 wt % being the most preferred.

Any of the biocides commonly employed in ink-jet inks may be employed in the practice of the invention, such as Nuosept 95, available from Huls America (Piscataway, N.J.); Proxel GXL, available from Zeneca (Wilmington, Del.); and glutaraldehyde, available from Union Carbide Company (Bound Brook, N.J.) under the trade designation Ucarcide 250. Proxel GXL is the preferred biocide.
The specific ink set disclosed herein is expected to find commercial use in ink-jet color printing.

### EXAMPLES

Inks are formulated and different properties of the formulated inks are measured in an effort to assess the benefits attained in the practice of the invention, namely, mottle and coalescence, which are inconsistencies (or incongruities) of print density with the same print block due to printing inconsistencies and solvent/ink interactions with the media. Good saturation is attained by maximizing the depth and shade of colors, which is affected by ink/media interactions.

**Table 1**

| ***Ink ID*** | ***Dye*** | ***Co surfactant*** | ***Surfactant*** | ***Media*** | ***Saturation*** |
|---|---|---|---|---|---|
| 1-1 | Cyan | 1,2-hexanediol | Linear, nonionic | HP Bright White | Excellent |
| 1-2 | Magenta | 2,2-diethyl-1,3-propanediol | Linear, nonionic | HP Bright White | Excellent |
| 1-3 | Magenta | 2,2-diethyl-1,3-propanediol | Branch, nonionic | HP Bright White | Excellent |
| 1-4 | Magenta | 2,2-diethyl-1,3-propanediol | Linear, nonionic | HP Premium Plus Photo Paper, Glossy | Excellent |
| 1-5 | Yellow | 2-methyl-2-propyl-1,3-propanediol | Linear, nonionic | HP Premium Plus Photo Paper, Glossy | Excellent |
| 1-6 | Cyan | 1,2-hexanediol | Aromatic nonionic | HP Premium Plus Photo Paper, Glossy | Excellent |
| 1-7 | Magenta | 1,2-hexanediol | Anionic | HP Bright White | Excellent |
| 1-8 | Yellow | 1,2-hexanediol | Zwitterionic | HP Bright White | Excellent |
| 1-9 | Magenta | 1,2-hexanediol | Branched, aromatic, nonionic | HP Bright White | Excellent |
| 1-10 | Magenta | 1,2-hexanediol | Zwitterionic | HP Bright White | Excellent |
| 1-11 | Cyan | 1,2-propanediol | Branch, nonionic | HP Bright White | Poor |
| 1-12 | Magenta | 2-methyl-1,3-methanediol | Linear, nonionic | HP Bright White | Good |
| 1-13 | Magenta | Trimethylol-propane | Branch, nonionic | HP Premium Plus Photo Paper, Glossy | Poor |
| 1-14 | Yellow | Glycerol | Branch, nonionic | HP Bright White | Poor |

Examples 1-1 to 1-10 contain the co-surfactants of this invention and show excellent saturation. Examples 1-11 to 1-14 do not contain the specific combinations disclosed herein and show poorer results.

## Claims

1. An inkjet ink comprising a colorant, a first surfactant containing from 8 to 18 carbons, and a second surfactant containing from 6 to 10 carbons and wherein said second surfactant is soluble in water by at least 3% by weight.

2. An inkjet ink as claimed in Claim 1, wherein said colourant is anionic, said first surfactant is anionic and is present in an amount from 0.2% to 6% by wt and said second surfactant is anionic.

3. An inkjet ink as claimed in claim 1 or 2 comprising from 0.1% to 20% by wt of said colorant, from 0.2% to 6% by wt of said first surfactant, and from 5% to 15% by wt of said second surfactant.

4. An inkjet ink as claimed in claim 1 wherein said colourant is cationic.

5. An inkjet ink as claimed in Claim 4 comprising from 0.1% to 10% by wt of said cationic colorant, from 0.2% to 6% by wt of said first surfactant, and from 5% to 15% by wt of said second surfactant.

6. An inkjet ink as claimed in any preceding claim additionally comprising from 0% to 3% of at least one of a buffer, a biocide, a metal chelator or other non-surfactant solvents.

7. An inkjet ink as claimed in any preceding claim wherein said colorant is a pigment.

8. An inkjet ink as claimed in any of claims 1 to 6 wherein said colorant is a dye.

9. An inkjet ink as claimed in any preceding claim wherein said second surfactant is 1,2-hexanediol; 2,2-diethyl-1,3-propanediol; 2-methyl-2-propyl-1,3-propanediol; or any mixtures thereof.

10. A method of printing with an inkjet ink printer displaying improved print attributes comprising employing an inkjet ink as claimed in any preceding claim.
